Europäisches Patentamt

European Patent Office

Office européen des brevets

(19)

(11) Veröffentlichungsnummer : **0 519 425 A2**

(12) # EUROPÄISCHE PATENTANMELDUNG

(21) Anmeldenummer : **92110221.6**

(51) Int. Cl.⁵ : **G01N 1/10, F16K 3/02**

(22) Anmeldetag : **17.06.92**

(30) Priorität : **19.06.91 DE 4120208**

(43) Veröffentlichungstag der Anmeldung :
**23.12.92 Patentblatt 92/52**

(84) Benannte Vertragsstaaten :
**AT BE CH DE DK ES FR GB IT LI NL SE**

(71) Anmelder : **EDMUND BÜHLER GmbH & Co.
Rottenburger Strasse 3
W-7454 Bodelshausen (DE)**

(72) Erfinder : **Fink, Willi,Dipl.-Ing.(FH)
Im Greut 39
W-7407 Rottenburg 1 (D)**

(74) Vertreter : **Möbus, Rudolf, Dipl.-Ing.
Hindenburgstrasse 65
W-7410 Reutlingen (DE)**

(54) **Entnahmevorrichtung für Proben, insbesondere aus einer strömenden Flüssigkeit.**

(57)    In der Probenentnahmevorrichtung ist ein Gleitschieber-Stellventil (10) vorgesehen, über welches ein Durchlaufkanal mit der zu überwachenden, insbesondere strömenden Flüssigkeit geführt ist. In dieses Gleitschieber-Stellventil (10) ist eine Probendosierkammer so integriert, daß sie in einer Durchlaufstellung des Stellventiles einen Teil des Durchlaufkanales für die strömende Flüssigkeit bildet, zur Probeentnahme aber aus dem Durchflußkanal gelöst und in ein Probengefäß entleerbar ist.

Fig. 2

Die Erfindung betrifft eine Entnahmevorrichtung für Proben insbesondere aus einer strömenden Flüssigkeit, mit mindestens einem entleerbaren Probenbehälter, der über mindestens ein Stellventil wahlweise mit einer Probendosierkammer oder einer Spülleitung verbindbar ist.

Probenentnahmegeräte der vorstehend genannten Art sind bekannt. Da diese Geräte über den Zustand von Produkten und Inhaltsstoffe Aufschluß geben sollen und häufig an entlegenen Stellen ohne Anschluß an das öffentliche Stromversorgungsnetz installiert werden müssen, besteht die Aufgabe, die Probenentnahmevorrichtungen so auszubilden, daß für eine sichere und verfälschungsfreie Probenentnahme möglichst wenig zu betätigende Eizelorgane erforderlich sind und die bewegten Teile kompakt und massearm ausgebildet sind, so daß ihre Verstellung wenig Energie erfordert, um einen dem Probenentnahmegerät zugeordneten Energiespeicher rationell zu nutzen.

Die gestellte Aufgabe wird bei einer Entnahmevorrichtung der eingangs genannten Art erfindungsgemäß dadurch erreicht, daß die Probendosierkammer einen Teil eines Flüssigkeits-Durchlaufkanales bildet und in einem Gleitschieber-Stellventil ausgebildet ist.

Bei der erfindungsgemäß ausgebildeten Entnahmevorrichtung bildet also die Probendosierkammer einen Teil des Durchlaufkanales oder eines Bypass-Kanales der zu überwachenden strömenden Flüssigkeit und ist außerdem in ein Stellventil der Vorrichtung integriert. Die Verwendung eines Gleitschieber-Stellventiles hierzu erlaubt eine günstige flache und kompakte Bauweise des Stellventiles, mit welchem gleichzeitig mehrere Verbindungen - auch getrennt voneinander zu haltende Verbindungswege, wie beispielsweise ein hydraulisches Leitungssystem und ein Gasleitungssystem - überschneidungsfrei mit geringem Stellenergieaufwand steuerbar sind. Das Gleitschieber-Stellventil kann in an sich bekannter Weise aus mehreren, relativ zueinander gleitverstellbaren, selbstdichtenden Scheiben bestehen, wobei in einer verstellbaren Scheibe davon der die Probendosierkammer bildende Durchlaufkanalteil ausgebildet ist in mindestens einer benachbarten stationären Scheibe eine Zuflußöffnung und/oder eine Abflußöffnung des Durchlaufkanales ausgebildet sind.

In den meisten Fällen können die erforderlichen Schaltverbindungen mit einem Gleitschieber-Stellventil bewirkt werden, bei welchem nur eine Scheibe zwischen zwei stationären Scheiben verstellbar ist, so daß für das Stellventil nur eine einzige Antriebsvorrichtung erforderlich ist. Dabei kann dieser verstellbaren Scheibe eine Längsverstellbewegung oder eine Drehverstellbewegung oder auch eine kombinierte Längs- und Drehverstellbewegung erteilt werden. Die Scheiben des Gleitschieber-Stellventiles können auswechselbar angeordnet sein, so daß für unterschiedliche Einsatzzwecke der Entnahmevorrichtung unterschiedliche Scheibenkombinationen gewählt werden können. Außerdem können die Scheiben des Gleitschieber-Stellventiles aus hochverschleißfestem Material, z. B. Keramikmaterial mit hoher Abriebfestigkeit und Beständigkeit gegen aggressive Stoffe gefertigt sein.

Die Probendosierkammer läßt sich in einer verstellbaren Scheibe des Gleitschieber-Stellventiles vorteilhafterweise entweder als Durchgangsbohrung oder aber als Wanne mit gekrümmtem Boden ausbilden, die von ihrem einen zu ihrem anderen Ende eine günstige Strömung der durchlaufenden und zu überwachenden Flüssigkeit erlaubt und an deren tiefster Stelle eine durch eine benachbarte Scheibe verschließbare Abzweigöffnung mit geringer Randwandungsstärke ausgebildet ist. Die geringe Randwandungsstärke hat den Vorteil, daß sich neben dem Durchströmbereich nur eine sehr kleine Öffnungskammer befindet, die eine Totzone für die durchströmende Flüssigkeit bilden kann und wenig Platz für die Auslagerung von Feststoffteilchen aus der durchlaufenden Flüssigkeit bietet. Bei einer Ausbildung der Probendosierkammer als Durchgangsbohrung in einer verstellbaren Scheibe des Gleitschieber-Stellventiles wird der Probenstrom direkt durch das Flachschiebersystem von unten nach oben hindurchgeführt. Es können verstellbare Scheiben mit unterschiedlich großen Durchgangsöffnungen und damit unterschiedlichen Volumen der Probendosierkammer vorgesehen sein. Hierbei kann die verstellbare Scheibe zweckmäßig auch mehrschichtig ausgebildet und auf ihrer Oberseite und auf ihrer Unterseite jeweils mit einer verschleißfesten Schicht, z. B. aus Keramikmaterial, versehen sein. An der verstellbaren Scheibe des Gleitschieber-Stellventiles kann direkt ein Sensor einer Einrichtung zur Überwachung des Probendurchflusses und der Einzelprobennahme angeordnet sein.

Die mit der Probendosierkammer versehene Scheibe des Gleitschieber-Stellventiles kann beispielsweise relativverstellbar zwischen zwei Scheiben angeordnet sein, von denen die erste Durchgänge für mindestens zwei Kanäle aufweist, an welche jeweils ein Probenbehälter anschließbar ist, und von denen die zweite neben der Zuflußöffnung und der Anflußöffnung für den Durchlaufkanal mindestens einen Durchgang für eine Spülleitung aufweist. Mit dem Gleitschieber-Stellventil läßt sich also auch das Spülen von selbstentleerbaren Probenbehältern der Entnahmevorrichtung steuern.

Nachfolgend werden zwei Ausführungsbeispiele eines Gleitschieber-Stellventiles für eine erfindungsgemäß ausgebildete Probenentnahmevorrichtung anhand der beiliegenden Zeichnungen näher erläutert.

Im einzelnen zeigen:

Fig. 1 eine Draufsicht auf das erst Ausführungsbeispiel eines Gleitschieber-Stellventils;

Fig. 2 einen zentralen Längsschnitt durch das Gleitschieber-Stellventil entlang seiner Verstellrichtung und der Linie II-II in Fig. 1;

Fig. 3 eine Draufsicht auf eine verstellbare Scheibe des Gleitschieber-Stellventiles;

Fig. 4 einen zentralen Schnitt durch die verstellbare Scheibe entlang der Linie IV-IV in Fig. 3;

Fig. 5 eine Draufsicht auf eine stationäre Scheibe des Gleitschieber-Stellventiles;

Fig. 6 eine Seitenansicht der stationären Scheibe nach Fig. 5;

Fig. 7 eine Aufsicht auf die verstellbare Scheibe nach Fig. 3 in einer Ausgangsstellung zu der stationären Scheibe nach Fig. 5,

Fig. 8 einen Querschnitt durch das ganze Gleitschieber-Stellventil entlang der Linie VIII-VIII in Fig. 7;

Fig. 9 eine Draufsicht auf die Scheibe nach Fig. 3 in einer ersten Verschiebestellung gegenüber der stationären Scheibe nach Fig. 5;

Fig. 10 einen Schnitt durch den ganzen Scheibensatz des Stellventiles entlang der Linie X-X in Fig. 9;

Fig. 11 eine Draufsicht auf die Scheibe nach Fig. 3 in einer zweiten Verstellage gegenüber der Scheibe nach Fig. 5;

Fig. 12 einen Schnitt durch den ganzen Scheibensatz des Stellventiles entlang der Linie XII-XII in Fig. 11;

Fig. 13 eine der Fig. 1 entsprechende Draufsicht auf das zweite Ausführungsbeispiel eines Gleitschieber-Stellventiles;

Fig. 14 einen der Fig. 2 entsprechenden zentralen Längsschnitt durch das Gleitschieber-Stellventil entlang seiner Verstellrichtung und der Linie XIV-XIV in Fig. 13;

Fig. 15 eine Draufsicht auf die verstellbare Scheibe des Gleitschieber-Stellventiles;

Fig. 16 eine Draufsicht auf eine stationäre Scheibe des Gleitschieber-Stellventiles.

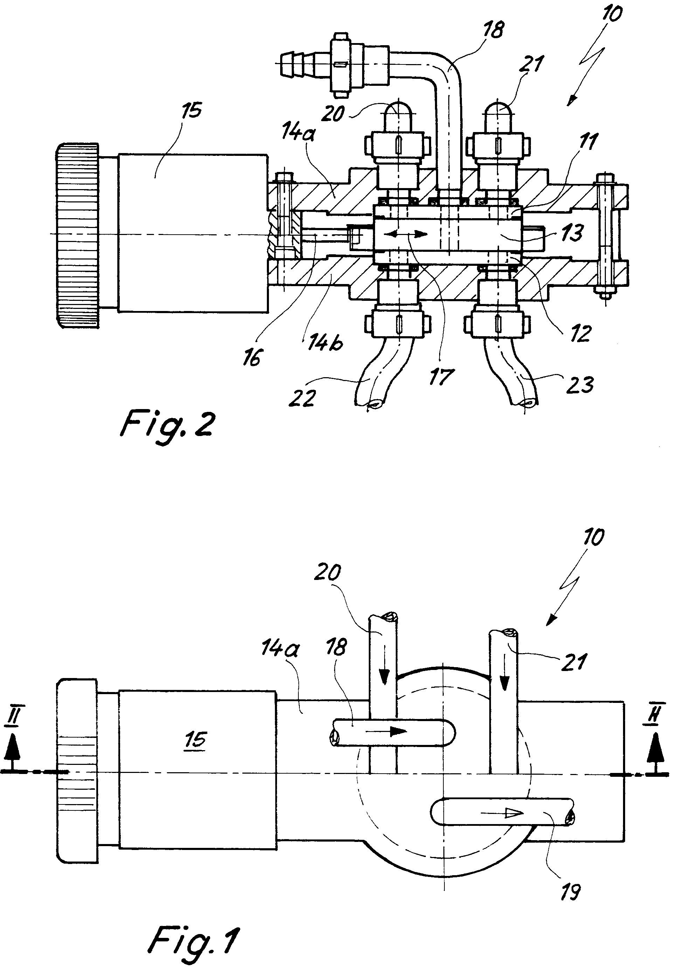

Das in den Fig. 1 und 2 dargestellte Gleitschieber-Stellventil 10 ist für eine nicht dargestellte Entnahmevorrichtung für Proben aus einer strömenden Flüssigkeit bestimmt. Es weist drei miteinander zusammenwirkende Scheiben 11, 12 und 13 auf, von denen die beiden Scheiben 11 und 12 stationär und die dritte Scheibe als Gleitschieber 13 zwischen den beiden Hälften 14a und 14b eines Ventilgehäuses eingespannt sind. An dem Gehäuse 14a/14b ist eine Antriebsvorrichtung 15 befestigt, die ein elektromagnetisches Schaltorgan, ein elektrischer Verstellmotor oder aber eine pneumatische oder hydraulische Zylinder/Kolbenanordnung sein kann. Die Antriebsvorrichtung 15 bewirkt über eine Stange 16 eine Längsverschiebung der mittleren Scheibe 13 in Richtung des in Fig. 2 eingetragenen Doppelpfeiles 17. An das Ventilgehäuse 14a/14b sind im Bereich der stationären Scheiben 11 und 12 des Gleitschieber-Stellventiles 10 verschiedene Leitungen angeschlossen. An der oberen Gehäusehälfte 14a sind dies eine Zuflußleitung 18 und eine Abflußleitung 19 für die zu überwachende strömende Flüssigkeit sowie zwei Anschlußleitungen 20 und 21 für Spülflüssigkeit. An die untere Gehäusehälfte 14b des Stellventiles sind eine erste Verbindungsleitung 22 zu einem ersten, nicht dargestellen Probenbehälter und eine zweite Verbindungsleitung 23 für einen ebenfalls nicht dargestellten zweiten Probenbehälter angeschlossen.

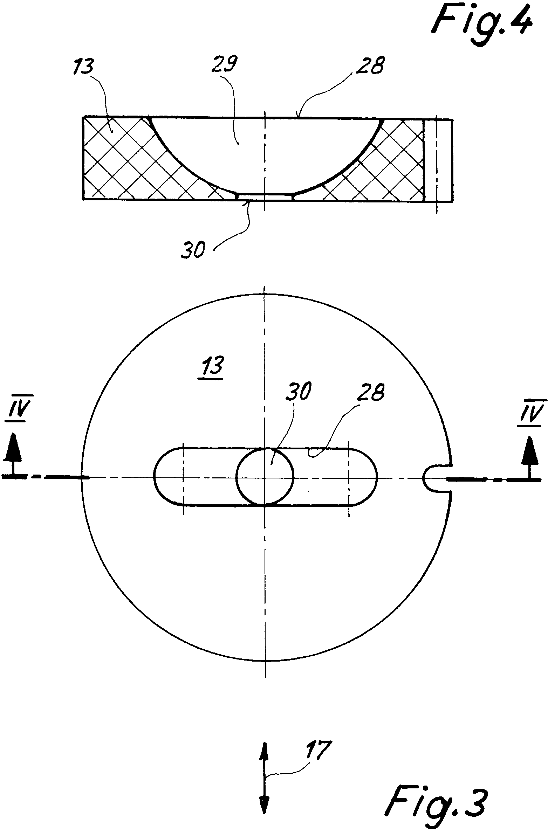

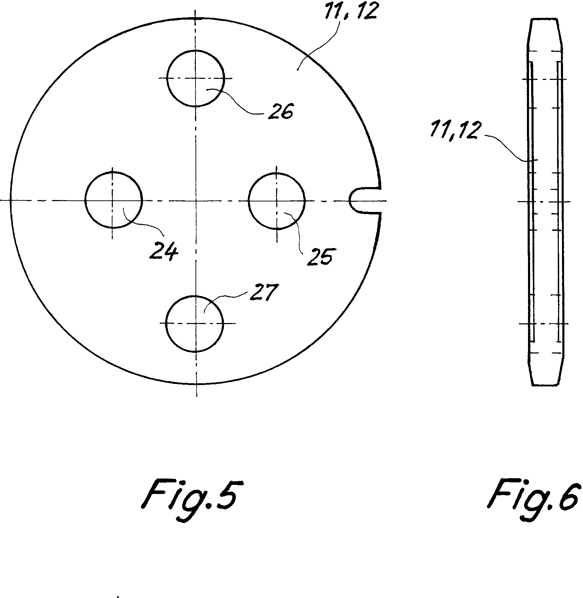

Die Fig. 3 bis 6 zeigen die einzelnen Scheiben des Gleitschieber-Stellventiles 10. Die Scheiben sind in den Fig. 3 - 6 um 90° gegenüber ihrer Darstellung in den Fig. 1 und 2 verdreht dargestellt, wie der eingezeichnete Doppelpfeil 17 für die Verstellrichtung zeigt. Die beiden Scheiben 11 und 12 sind identisch ausgebildet und aus den Fig. 5 und 6 ersichtlich. Sie sind im dargestellten Ausführungsbeispiel kreisrunde Scheiben mit vier Durchgangsöffnungen, nämlich zwei Durchgangsöffnungen 24 und 25, die bei der oberen stationären Scheibe 11 der Zuflußleitung 18 oder der Abflußleitung 19 für die zu überwachende Flüssigkeit zugeordnet sind. In der unteren stationären Scheibe 12 sind diese Öffnungen von keiner Anschlußleitung belegt. Die beiden anderen Öffnungen 26 und 27 sind bei der oberen Scheibe 11 jeweils einer der beiden Anschlußleitungen 20, 21 für Spülflüssigkeit zugeordnet, bei der unteren Scheibe 12 den Verbindungsleitungen 22 und 23 zu den beiden Probenbehältern.

Die in den Fig. 3 und 4 dargestellte, mit der Antriebsvorrichtung 15 gekoppelte, verstellbare mittlere Scheibe 13 weist auf ihrer Oberseite eine schlitzartige Öffnung 28 auf, an welche sich eine wannenförmige Ausnehmung 29 anschließt, an deren tiefster Stelle eine runde Durchgangsöffnung 30 zur Unterseite der Scheibe 13 ausgebildet ist. Die Durchgangsöffnung 30 weist nur eine geringe Randwandungsstärke r auf.

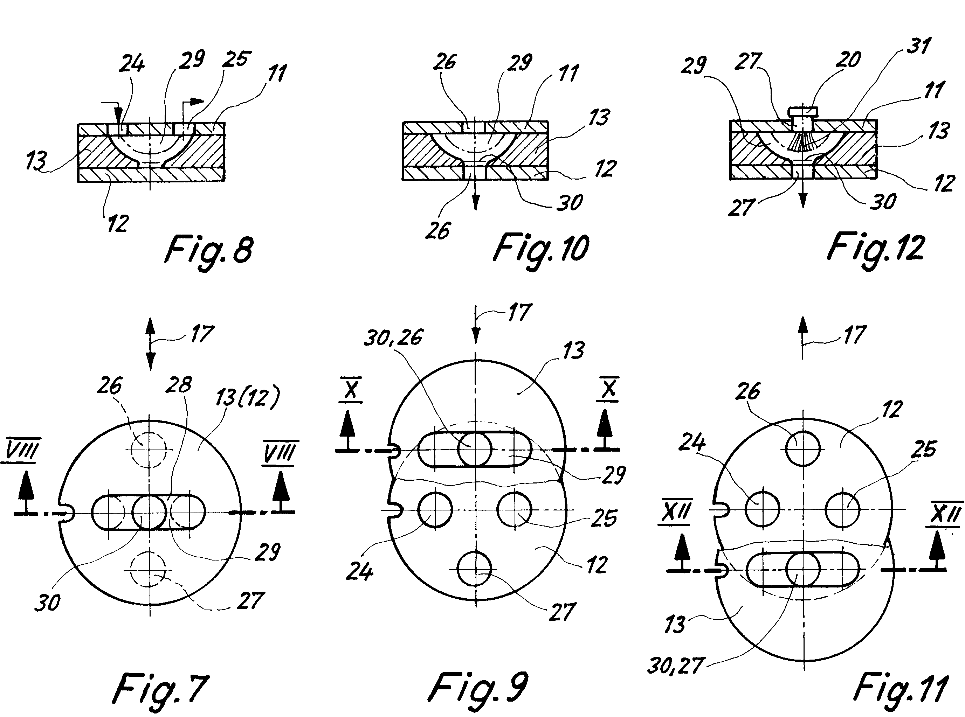

Mindestens die verstellbare, als Gleitschieber wirkende mittlere Scheibe 13, vorzugsweise aber alle drei Scheiben 11-13 sind aus Keramikmaterial gefertigt. Die Fig. 7 und 8 zeigen die drei Scheiben in einer deckungsgleichen Stellung. Dabei befindet sich die untere Öffnung 30 der verstellbaren Scheibe 13 über dem lockfreien Mittelteil der unteren stationären Scheibe 12. Die wannenförmige Ausnehmung 29 der verstellbaren Scheibe 13 ist gemäß Fig. 8 von der oberen stationären Scheibe 11 so abgedeckt, daß die Enden der schlitzförmigen Öffnung 28 in Verbindung mit den beiden Öffnungen 24 und 25 der Scheibe 11 stehen. Dadurch ist durch die wannenförmige Ausnehmung 29 der mittleren Scheibe 13 hindurch eine Verbindung zwischen der Zuflußleitung 18 und der Abflußleitung 19 für die zu überwachende Flüssigkeit geschaffen. Die wannenförmige Ausnehmung 29 bildet also einen Teil des Flüssigkeits-Durchlaufkanales, wobei die Wannenform eine sauberen Durchfluß der Flüssigkeit in der in Fig. 8 eingezeichneten Pfeilrichtung gewährleistet. Die wannenförmige Ausnehmung 29 ist so bemessen, daß sie zusammen mit dem kleinen Volumen der unteren Öffnung 30 genau einem gewünschten Probenvolumen entspricht, das in den Probenbehältern gesammelt werden soll. Die wannenförmige Ausnehmung 29 bildet also eine Probendosierkammer, die bei herkömmlichen Probenentnahmevorrichtungen in einem gesonderten Gehäuse ausgebildet und über eine besondere Anschlußleitung mit einem Füllventil verbunden ist.

In der deckungsgleichen Stellung der drei Scheiben 11-13 erlaubt das Gleitschieber-Stellventil 10 also einen freien Durchfluß der zu überwachenden Flüssigkeit, wobei die Zuflußleitung 20 und die Abflußleitung 19 auch Druckleitungen sein können und die Flüssigkeit unter Druck durch die wannenförmige Ausnehmung 29 hindurchströmt. Die anderen Anschlußleitungen 20, 21, 22 und 23 und die zugehörigen Anschlußöffnungen 26 und 27 in den beiden stationären Scheiben 11, 12 sind durch die mittlere Scheibe 13 alle verschlossen.

Die Fig. 9 und 10 zeigen die verstellbare mittlere Scheibe 13 in einer Verstellage, die bei ihrer Verschiebung in Fig. 2 nach rechts entsteht. Die wannenförmige Ausnehmung 29 ist aus dem Bereich der beiden Öffnungen 24 und 25 verschoben und damit die Durchflußleitung für die zu überwachende Flüssigkeit unterbrochen. Die mit der Flüssigkeit gefüllte wannenförmige Ausnehmung 29 und Probendosierkammer gelangt über die mit einer Probenflasche verbundene Öffnung 26 der unteren Scheibe 12, so daß sich der Inhalt der Probendosierkammer in die Probenflasche entleeren kann. Eine hierzu erforderliche Entlüftung der wannenförmigen Ausnehmung 29 erfolgt über die Öffnung 26 der oberen stationären Scheibe 11. An diese Öffnung ist auch die Anschlußleitung 20 für eine Spülflüssigkeit angeschlossen, doch bei der beschriebenen Probenentnahme der Spülflüssigkeitszufluß gesperrt.

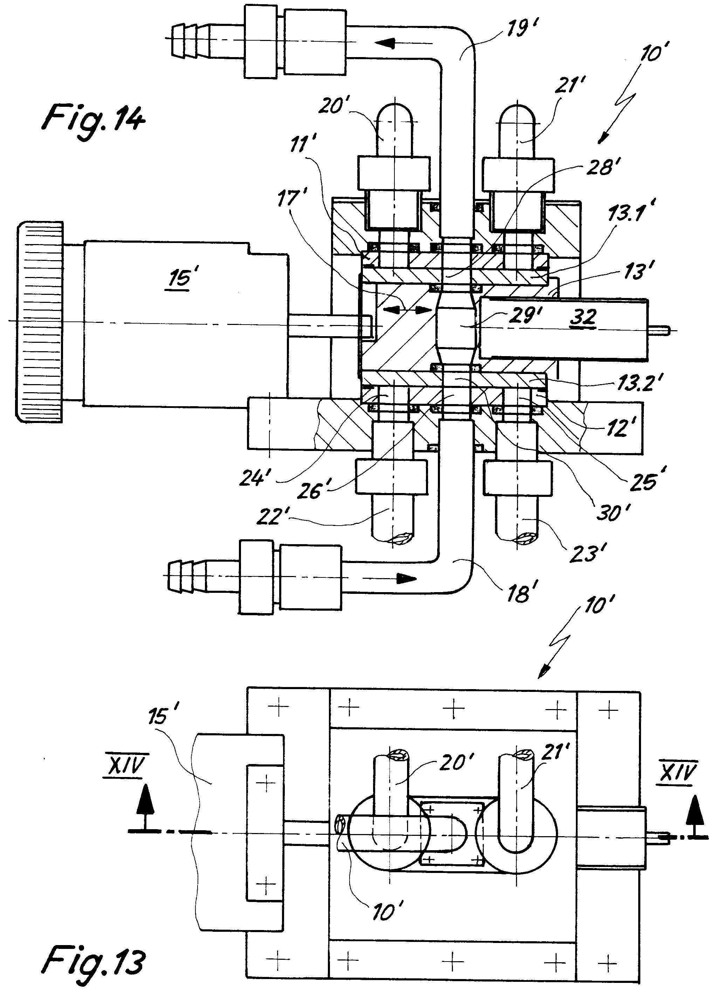

Die Fig. 11 und 12 zeigen eine der vorher beschriebenen Einstellung des Stellventiles entsprechende Einstellung durch eine Verschiebung der mittleren Scheibe 13 gegenüber den beiden stationären Scheiben 11 und 12 in Fig. 2 nach links, bis die untere Öffnung 30 der mittleren Scheibe 13 zur Deckung mit der Öffnung 27 der unteren Scheibe 12 gelangt, die über die Anschlußleitung 23 mit einem zweiten Probegefäß verbunden ist. In dieser Stellung erfolgt also eine Entleerung der Probendosierkammer in den zweiten Probenbehälter. Die Probenbehälter können in an sich bekannter Weise selbstentleerbare Probenbehälter sein, die bei fehlender Entnahme oder nach Durchführung von Analysen automatisch entleert werden und anschließend gespült werden müssen. Fig. 12 zeigt, wie über die Öffnung 27 der oberen stationären Scheibe 11 aus der Leitung 20 eine Spülflüssigkeit 31 durch die wannenförmige Ausnehmung 29 der mittleren Scheibe 13 hindurch und über die Öffnung 27 in der unteren stationären Scheibe 12 in den nicht dargestellten zweiten Probenbehälter geleitet wird.

Bei dem in den Fig. 13 - 16 dargestellten zweiten Ausführungsbeispiel sind die dem ersten Ausführungsbeispiel entsprechenden Teile mit den gleichen Bezugsziffern, ergänzt durch einen Indexstrich, bezeichnet. Das Gleitschieber-Stellventil 10' unterscheidet sich von dem ersten Ausführungsbeispiel im wesentlichen durch den Aufbau der als Gleitschieber ausgebildeten mittleren Scheibe 13'. In der Scheibe 13' ist die Probendosierkammer 29' als Durchgangsöffnung und nicht als wannenartige Ausnehmung ausgebildet. Die Probendosierkammer 29' ist an einer Stelle mit einem kapazitiven Sensor 32 einer nicht dargestellten Steuerschaltung versehen. Mit dem Sensor 32 kann hier sowohl ein Flüssigkeitsdurchfluß als auch die Entnahme einer Probe festgestellt werden.

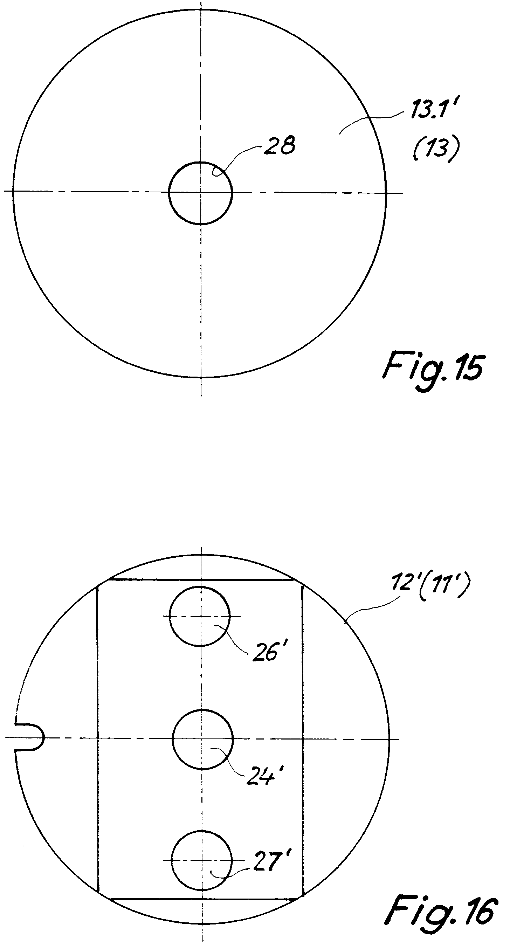

Die Scheibe 13' ist aus einem korrosionsbeständigen Kunststoffmaterial gefertigt und auf ihrer Oberseite und auf ihrer Unterseite jeweils mit einer Keramikscheibe 13.1' und 13.2' versehen, in welchen eine Eingangsöffnung 28' und eine Ausgangsöffnung 30' für die Probendosierkammer 29' ausgebildet sind (s. auch Fig. 15). Die beiden stationären Scheiben 11' und 12' sind gleich ausgebildet und weisen gemäß Fig. 16 drei Durchgangsöffnungen 24', 26' und 27' auf. An die mittlere Durchgangsöffnung 24' der unteren stationären Scheibe 12' ist die Zuflußleitung 18' angeschlossen. An die mittlere Durchgangsöffnung 24' der oberen stationären Scheibe 11' ist die Abflußleitung 19' angeschlossen. An die beiden äußeren Durchgangsöffnungen 26' und 27' der unteren stationären Scheibe 12' sind die Anschlußleitungen 22' und 23' für zwei nicht dargestellte Probensammelbehälter angeschlossen. An die entsprechenden beiden außenliegenden Durchgangsöffnungen 26' und 27' der oberen stationären Scheibe 11' sind Anschlußleitungen 20' und 21' für Spülflüssigkeit angeschlossen. In der aus Fig. 14 ersichtlichen Mittelstellung der verstellbaren Scheibe 13' ist über die Durchgangsöffnungen 28' und 30' und die Probendosierkammer 29' ein freier Durchgang zwischen der Anschlußleitung 18' und der Abflußleitung 19' für die zu überwachende Flüssigkeit geschaffen. Wird die mittlere Scheibe 13' in Fig. 14 nach links oder nach rechts verschoben, wird der freie Durchfluß der Flüssigkeit unterbrochen und die Probendosierkammer 29' über die Anschlußleitung 22' oder die Anschlußleitung 23' zu einem der beiden Probensammelbehälter gebracht. Da, wie bereits in Verbindung mit dem ersten Ausführungsbeispiel beschrieben, das Gleitschieber-Stellventil 10' als Scheibenpaket zwischen zwei Gehäusehälften ausgebildet ist, kann jederzeit die mittleren Scheibe 13′ durch eine andere Scheibe mit einer Probendosierkammer 29′ unterschiedlichen Volumens ersetzt werden.

Mit einer in das Gleitschieber-Stellventil integrierten Probendosierkammer ist also eine Probeentnahme unter verschiedenen Druckbedingungen in dem zu überwachenden Flüssigkeitskanal möglich. Das Stellventil läßt sich in ein hermetisch geschlossenes System einsetzen und ist auch für den Einsatz in explosionsgefährdeten Bereichen geeignet. Leckprobleme können mit dem Gleitschieber-Stellventil vermieden werden, das einen hohen Schaltwechsel erlaubt, äußerst verschleißarm ist und nur einen geringen Energieverbrauch hat. Das Stellventil läßt sich sterilisieren und dadurch problemlos auch in biologischen Systemen einsetzen. Es läßt sich auch für hohe Temperaturen auslegen. Verbindungsleitungen von dem zu überwachenden Flüssigkeitskanal zu der Probendosierkammer entfallen und dadurch auch das Problem von ein Analysenergebnis beeinflussenden Totvolumen. Das Gleitschieber-Stellventil läßt sich hinsichtlich von Mehrfachfunktionen komplexer als die dargestellten einfachen Ausführungsbeispiele gestalten, beispielsweise mit zwei einander benachbarten verstellbaren Gleitschiebern, die auch in Folgesteuerung durch eine einzige Antriebsvorrichtung betrieben werden können, und durch Scheibe mit einer größeren Anzahl von Durchgangsöffnungen oder Kanälen, wobei auch äußere Anschlußscheiben beispielsweise verdrehbar in das Ventilgehäuse eingesetzt sein können.

**Patentansprüche**

1. Entnahmevorrichtung für Proben, insbesondere aus einer strömenden Flüssigkeit, mit mindestens einem entleerbaren Probenbehälter, der über mindestens ein Stellventil wahlweise mit einer Probendosierkammer oder einer Spülleitung verbindbar ist, dadurch gekennzeichnet, daß die Probendosierkammer (29, 29′) einen Teil eines Flüssigkeits-Durchlaufkanales (18/19; 18′/19′) bildet und in einem Gleitschieber-Stellventil (10, 10′) ausgebildet ist.

2. Probenentnahmevorrichtung nach Anspruch 1, dadurch gekennzeichnet, daß das Gleitschieber-Stellventil (10, 10′) in an sich bekannter Weise aus mehreren, relativ zueinander gleitverstellbaren Scheiben (11-13, 11′13′) besteht, in einer verstellbaren Scheibe (13, 13′) davon der die Probendosierkammer (29,29′) bildende Durchlaufkanalteil ausgebildet ist und in mindestens einer benachbarten stationären Scheibe (11, 12) eine Zuflußöffnung (24 24′) und/oder eine Abflußöffnung (25) des Durchlaufkanales ausgebildet sind.

3. Entnahmevorrichtung nach Anspruch 1 und 2, dadurch gekennzeichnet, daß die Probendosierkammer (29) in der verstellbaren Scheibe (13) des Gleitschieber-Stellventils (10) als Wanne mit gekrümmten Boden ausgebildet ist, an deren tiefster Stelle eine durch eine benachbarte Scheibe (12) verschließbare Abzweigöffnung (30) mit geringer Randwandungsstärke (r) ausgebildet ist.

4. Entnahmevorrichtung nach einem der Ansprüche 1 bis 3, dadurch gekennzeichnet, daß die mit der Probendosierkammer (29) versehene Scheibe (13) relativverstellbar zwischen zwei Scheiben (11, 12) angeordnet ist, von denen die untere (12) Durchgänge (26, 27) für mindestens zwei Kanäle (22, 23) aufweist, an welche jeweils ein Probenbehälter anschließbar ist, und von denen die obere (11) neben der Zuflußöffnung (24) und der Abflußöffnung (25) für den Durchlaufkanal mindestens einen Durchgang (26, 27) für eine Spülleitung (20, 21) aufweist.

5. Entnahmevorrichtung nach Anspruch 1 und 2, dadurch gekennzeichnet, daß die Probendosierkammer (29′) als Durchgangskanal in der verstellbaren Scheibe (13′) des Gleitschieber-Stellventiles (10′) ausgebildet ist, der eine untere Öffnung (30′) und eine obere Öffnung (28′) aufweist.

6. Entnahmevorrichtung nach Anspruch 5, dadurch gekennzeichnet, daß die verstellbare Scheibe (13′) auf beiden Seiten mit einer Platte (13.1′, 13.2′) aus verschleißfestem Material belegt ist.

7. Entnahmevorrichtung nach einem der Ansprüche 1 bis 6, dadurch gekennzeichnet, daß jede verstellbare Scheibe (13, 13′) des Gleitschieber-Stellventiles mit einer gesonderten Antriebsvorrichtung (15, 15′) für eine geradlinige und/oder gekrümmte Verstellbewegung gekoppelt ist.

8. Entnahmevorrichtung nach einem der Ansprüche 1 bis 6, dadurch gekennzeichnet, daß das Gleitschieber-Stellventil (10, 10′) eine einzige Antriebsvorrichtung (15, 15′) aufweist, mit welcher alle verstellbaren Scheiben (13, 13′) direkt oder indirekt gekoppelt sind.

9. Entnahmevorrichtung nach einem der Ansprüche 1 bis 8, dadurch gekennzeichnet, daß die Scheiben (11-13, 11′-13′) des Gleitschieber-Stellventiles (10, 10′) auswechselbar angeordnet sind.

10. Entnahmevorrichtung nach einem der Ansprüche 1 bis 9, dadurch gekennzeichnet, daß die Scheiben (11-13, 11′-13′) des Gleitschieber-Stellventiles (10, 10′) mindestens zum Teil aus Keramikmaterial gefertigt sind.

Fig. 2

Fig.1

Fig.4

Fig.3

11, 12

26

24

25

27

11,12

**Fig.5**

**Fig.6**

Fig.12 Fig.11 Fig.10 Fig.9 Fig.8 Fig.7

*Fig. 14*

*Fig. 13*

28

13.1'
(13)

Fig.15

12'(11')

26'

24'

27'

Fig.16